# FASCICULE DE BREVET EUROPEEN

(11) **EP 2 688 163 B1**
(45) Date de publication et mention de la délivrance du brevet: **01.02.2017**
(21) Numéro de dépôt: 13171357.0
(22) Date de dépôt: 11.06.2013
(51) Int. Cl.: H02B 13/025

(54) **Enveloppe de protection électrique comportant un volet mobile d'évacuation de gaz**
Kapselung mit einer beweglichen Druckentlastungsblende
Electric protection enclosure comprising a mobile gas venting flap

(30) Priorité: 17.07.2012 FR 1256872
(43) Date de publication de la demande: 22.01.2014
(73) Titulaire: Schneider Electric Industries SAS, 92500 Rueil-Malmaison (FR)
(72) Inventeur: Laye, Jérôme, 38050 GRENOBLE Cedex 09 (FR)
(74) Mandataire: Colette, Marie-Françoise

(56) Documents cités:
- JP-A- H11 260 205
- JP-U- S5 127 859
- JP-U- 51 125 259
- JP-U- S52 121 648
- US-A- 4 701 583

## Description

### DOMAINE TECHNIQUE

L'invention concerne une enveloppe de protection d'un appareillage électrique munie d'un dispositif permettant l'évacuation des gaz. L'invention propose plus particulièrement une enveloppe comportant une ouverture qui est maintenue fermée par un volet en utilisation normale et qui est dégagée en cas de surpression dans l'enveloppe, le volet restant solidaire de l'enveloppe et la dimension du passage des gaz étant contrôlée.

### ÉTAT DE LA TECHNIQUE ANTÉRIEURE

Un poste de distribution électrique à moyenne tension (MT) comporte une pluralité de cellules électriques accolées en série et dont chacune reçoit un appareillage assurant une fonction particulière du poste de distribution, telle que par exemple la coupure du courant, la mise à la terre de chaque phase d'alimentation, la mesure de paramètres de fonctionnement du poste de distribution. Une enveloppe de protection est couramment associée à chacune des cellules pour maintenir les appareils, cloisonner les différents compartiments ayant des fonctions particulières, maintenir le degré de protection IP (« *Ingress Protection Rating* »),....

Bien que toutes les précautions soient prises, des arcs internes peuvent survenir dans les unités fonctionnelles d'un poste MT. Le défaut d'arc interne est un court-circuit pouvant survenir dans un équipement électrique par perte de la rigidité diélectrique entre deux conducteurs au potentiel différent, ou entre un conducteur et la masse de l'équipement, dont les causes peuvent être consécutives à un échauffement de conducteurs, au vieillissement d'isolants, à l'oubli d'un outil entre deux conducteurs non isolés lors d'une maintenance, à l'entrée d'un animal dans un équipement sous tension, etc. D'une durée pouvant dépasser une seconde avant que les appareils de protection en amont ne déclenchent pour supprimer le court-circuit, ce défaut est rare, mais sa criticité impose d'en maîtriser les effets. De fait, l'arc interne comprend une première phase d'onde de choc de 0 à 5 ms dont les effets sont mécaniques, une deuxième phase de montée en pression (entre 5 et 30 ms) et une troisième phase d'expulsion des gaz, avec un dégagement thermique extrêmement important.

Si l'onde de choc cause des déformations mécaniques incontrôlées et des ruptures des éléments de fixation, le dégazage accentue encore les déformations mécaniques et l'affaiblissement des éléments de fixation. Ainsi, pour un poste moyenne tension, il convient d'anticiper les éventuelles détériorations des équipements, mais surtout de l'enveloppe fermée, à savoir : perte d'étanchéité ou perforation de l'enveloppe extérieure, rupture des fermetures de portes et panneaux et/ou des fixations mécaniques, sollicitation très forte de la structure de l'équipement, expulsion de pièces après rupture.

Par ailleurs, les gaz à haute pression qui sont contenus dans l'enveloppe présentent un certain risque s'ils ne sont pas évacués de manière contrôlée : il est nécessaire de canaliser le flux de gaz s'échappant, pour protéger un opérateur intervenant à proximité de l'enveloppe.

Le document US 5 878 905 décrit un dispositif d'évacuation de gaz pour une installation électrique comportant un volet mobile monté pivotant par rapport à une paroi de l'enveloppe. En cas de surpression des gaz dans le volume interne de l'enveloppe, le volet pivote par rapport à la paroi de l'enveloppe, dégageant en partie une ouverture d'évacuation. Un dispositif amortisseur est associé au volet, pour le guider et en limiter la vitesse de déplacement. Un tel montage du volet implique l'utilisation de nombreuses pièces mobiles ; de plus, l'encombrement du dispositif est relativement important, à cause notamment de la course de ces pièces mobiles.

### EXPOSÉ DE L'INVENTION

L'invention se propose, parmi autres avantages, de pallier des inconvénients des dispositifs existants. L'invention a pour but de proposer un dispositif d'évacuation de gaz comportant des moyens de liaison du volet mobile dont l'encombrement et le nombre de pièces utilisées sont réduits, tout en assurant une fiabilité dans le maintien du volet en position et dans le flux d'échappement des gaz.

Sous un de ses aspects, l'invention propose une enveloppe de protection d'un appareillage électrique, qui comporte une paroi, usuellement horizontale supérieure, avec un orifice muni d'un volet apte à être déplacé, notamment sous l'action d'une surpression à l'intérieur de l'enveloppe, entre une première position d'obturation de l'orifice qui peut atteindre un degré IP3x ou plus, et une deuxième position d'ouverture dans laquelle un passage de gaz est permis entre l'orifice et le volet. Des moyens de liaison solidarisent le volet à la paroi de l'enveloppe dans laquelle l'orifice est réalisé, en périphérie dudit orifice : ils maintiennent le volet en position de fermeture lorsque la pression interne est inférieure à un seuil. Les moyens de liaison comprennent deux éléments séparés pour assurer la solidité de la solidarisation, et la rapidité d'ouverture ; la solidarisation du volet via le bord de l'orifice optimise le passage via l'orifice et le volet en gardant l'ouverture maximale permise par la taille de l'orifice.

En particulier, les moyens de liaison comprennent des premiers moyens rigides, solidarisés au volet, mobiles en translation de la première à la deuxième position par rapport à l'enveloppe. Ces premiers moyens assurent le guidage du volet, et le maintien en position ouverte dans laquelle le volet se situe face à l'orifice pour créer un effet de chicane guidant les gaz. De plus, les premiers moyens comprennent des moyens pour guider la course du volet et avantageusement la limiter. Les premiers moyens sont notamment composés d'un U métallique comprenant une portion fixée au volet et deux branches orthogonales qui portent des ergots aptes à venir en butée contre un élément fixé à la paroi dans l'orifice pour bloquer le volet en position ouverte. Avantageusement, le volet est associé à deux premiers moyens en U, qui comprennent eux-mêmes deux ergots par branche, mais suivant la taille du volet et la résistance voulue, d'autres configurations sont possibles.

Les moyens de liaison comprennent également des deuxièmes moyens solidarisant le volet, de préférence au niveau des premiers moyens, et la paroi de l'enveloppe via au moins un élément déformable apte à se déformer lorsque la pression à l'intérieur de l'enveloppe est supérieure au seuil ; les éléments déformables sont avantageusement répartis symétriquement et/ou uniformément autour de l'orifice. Les deuxièmes moyens comprennent de préférence un cadre rigide fixé sur la paroi, à l'intérieur de l'enveloppe, duquel font saillie des languettes déformables fixées au volet, par exemple au nombre de quatre. De préférence, chaque languette comprend une découpe interne en forme de U pour délimiter une patte qui comprend les moyens de fixation au volet : la déformation de la languette en direction orthogonale au cadre entraîne la formation d'un V entre l'extrémité libre de la patte et l'extrémité de la languette couplée au cadre, ce qui donne la course de déplacement du volet. La rigidité est adaptée pour une déformation plastique rapide en cas de surpression.

Avantageusement, les premiers et/ou les deuxièmes moyens sont fabriqués chacun en une seule pièce, par découpe et pliage d'une plaque métallique ou tôle. Les solidarisations au volet et à l'enveloppe peuvent être démontables, par exemple via des boulons ou vis, ou certaines peuvent être rivetées.

Sous un autre aspect, l'invention concerne une cellule d'un poste moyenne tension dans laquelle un appareillage, notamment de coupure, est logée dans l'enveloppe précédente.

### BRÈVE DESCRIPTION DES DESSINS

D'autres caractéristiques et avantages de l'invention apparaîtront à la lecture de la description détaillée, mais non limitative, qui suit pour la compréhension de laquelle on se reportera aux figures annexées parmi lesquelles :
- la figure 1 est une représentation schématique en perspective d'une enveloppe d'une installation électrique selon un mode de réalisation préféré de l'invention;
- les figures 2A et 2B sont des détails en perspective du volet mobile et des moyens de liaison en position de fermeture et en position d'ouverture, respectivement ;
- la figure 3 est une représentation schématique en éclaté montrant le volet et les moyens de liaison selon un mode de réalisation préféré de l'invention ;
- la figure 4 est un détail à plus grande échelle d'une languette déformable ; et
- la figure 5 est une vue latérale de la languette déformable représentée après sa déformation permanente.

### EXPOSÉ DÉTAILLÉ DE MODES DE RÉALISATION PARTICULIERS

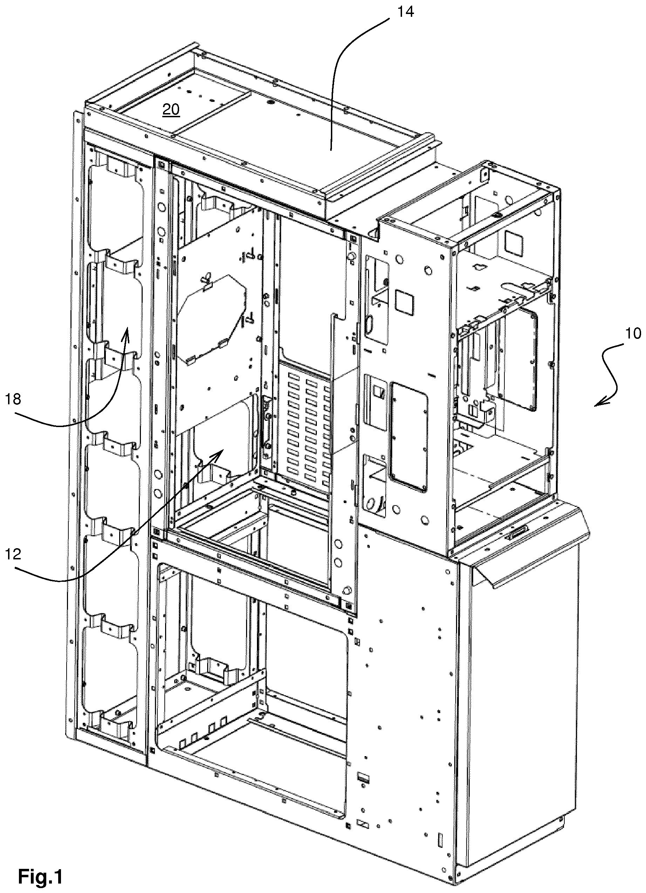

Tel qu'illustré en figure 1 une enveloppe métallique 10 d'une installation électrique telle que par exemple une cellule d'un poste de distribution électrique moyenne tension, délimite un espace 12 destiné à recevoir un appareillage électrique (non représenté) assurant une fonction particulière du poste de distribution, par exemple un dispositif de coupure MT. L'espace 12 est composé d'une pluralité de compartiments dédiés chacun à une fonction précise, tel que par exemple décrit dans la demande de brevet déposée le 28 février 2012 et non encore publiée FR 12 00574, qui présente une architecture pour laquelle l'invention est particulièrement adaptée. En fonctionnement, l'espace 12 délimité par l'enveloppe 10 est fermé selon un indice de protection approprié IP2x, IP3x ou IP4x.

Une paroi 14 de l'enveloppe 10 comporte un orifice 16 qui permet de faire communiquer l'espace interne 12 de l'enveloppe 10 avec l'extérieur ; de préférence, la paroi 14 est la paroi supérieure horizontale et l'orifice 16 se trouve au dessus du compartiment du poste MT communément appelé «cheminée» 18. La section de l'orifice 16 peut notamment correspondre à la taille de la cheminée 18, mais d'autres alternatives sont possibles, en particulier pour des enveloppes 10 d'usage différent.

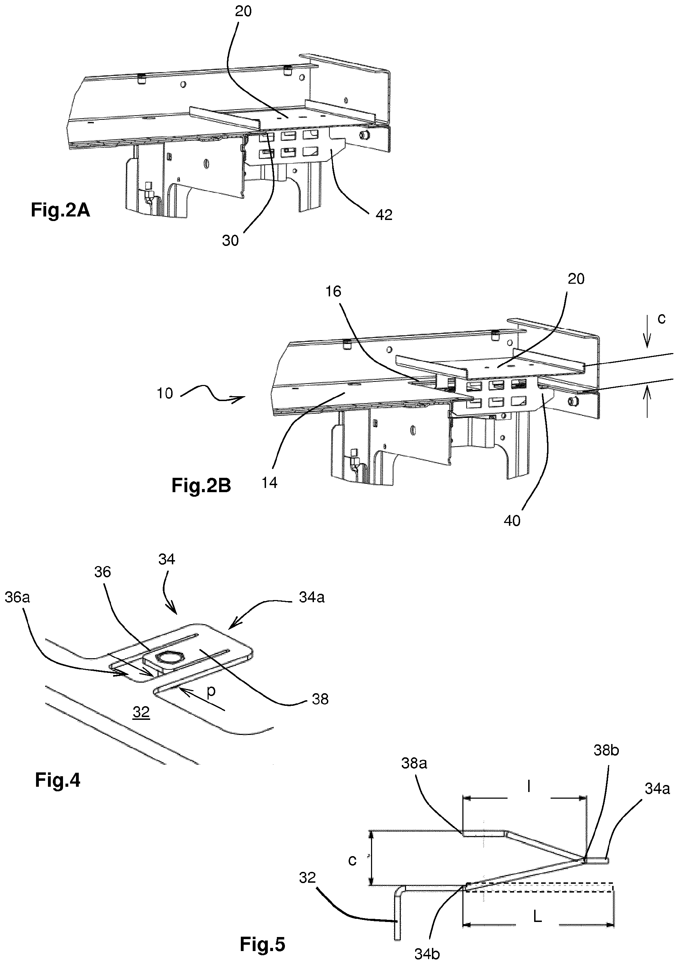

En conditions normales de fonctionnement, l'orifice 16 est obturé par un volet 20 qui est monté mobile par rapport à la paroi 14 de l'enveloppe 10 entre une position de fermeture représentée à la figure 2A, dans laquelle le volet 20 obture l'ouverture 16 de manière étanche, avantageusement en respectant un critère d'étanchéité IP3x, et une position d'ouverture représentée à la figure 2B, ouvrant un passage entre le volet 20 et l'orifice 16, permettant ainsi à des gaz de s'évacuer vers l'extérieur de l'enveloppe 10. Selon l'invention, le volet 20 reste solidaire de l'enveloppe 10, et il reste en position ouverte face à l'orifice 16, limitant ainsi le passage des gaz pour contrôler l'évacuation.

Le volet 20 peut être réalisé de toutes les façons possibles, mais il est de préférence formé à partir d'une plaque métallique, avantageusement d'une simple tôle pliée sur deux côtés 22 pour le renforcer.

Le déplacement du volet 20 vers sa position d'ouverture a lieu lorsque la pression des gaz dans l'espace interne 12 de l'enveloppe 10 s'élève par rapport à une pression normale de fonctionnement, habituellement la pression atmosphérique, et devient supérieure à une pression prédéfinie pour laquelle les gaz présentent un danger potentiel pour un opérateur intervenant à proximité de l'enveloppe 10 ; en particulier, le passage de la première à la deuxième position est réalisé lorsque le différentiel de pression à l'intérieur de l'enveloppe 10 atteint 0,5 à 1 bar, élévation qui a lieu notamment lorsqu'un arc électrique se forme dans l'appareillage électrique.

Le volet 20 est monté sur la paroi supérieure 14 par des moyens de liaison 30, qui le maintiennent en position de fermeture en usage normal, et réalisent son guidage en déplacement vers sa position d'ouverture, dans laquelle il reste solidaire de l'enveloppe 10. De préférence, le déplacement du volet 20 est réalisé par une translation simple, normale à la surface de la paroi 14 sur laquelle il repose : les moyens de liaison 30 sont réalisés de manière qu'en position d'ouverture, le volet 20 soit décalé vers le haut par rapport à sa position de fermeture, tout en restant solidaire de l'enveloppe 10 et donc dans le passage face à l'orifice 16.

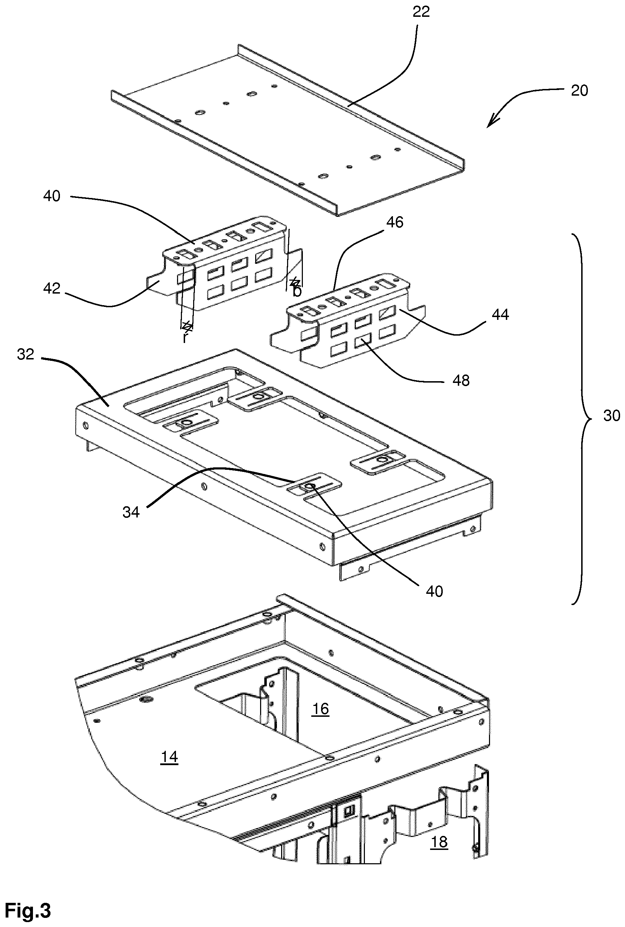

Notamment, tel qu'illustré en figure 3, les moyens de liaison 30 comportent un cadre 32, de préférence similaire à la forme de l'orifice 16, notamment rectangulaire, qui est solidaire, en particulier par l'intermédiaire de rivets, boulon ou vis, à la paroi supérieure 14, à l'intérieur de l'enveloppe 10, autour de l'orifice 16 : ainsi fixé contre une face interne de la paroi 14 de l'enveloppe 10 munie de l'orifice 16, le cadre 32 ne subit pas de contraintes mécaniques excessives au niveau de ses moyens de fixation, et il peut rester en place sans renfort supplémentaires lors de la surpression.

Les moyens de liaison 30 comportent en outre au moins un élément déformable 34 couplé au volet 20 pour en assurer une ouverture contrôlée. En particulier, le cadre 32 est muni d'une pluralité de languettes 34, ici au nombre de quatre, qui s'étendent dans le plan du cadre 32 vers l'intérieur depuis un bord du cadre 32.

Les languettes 34 sont réparties de manière régulière le long du cadre 32 et avantageusement orthogonales par rapport à sa découpe interne. De préférence, les languettes 34 sont réparties symétriquement par rapport à un plan longitudinal vertical médian de l'orifice 16 et symétriquement par rapport à un plan transversal vertical médian de l'orifice 16. Le nombre de languettes 34 est optimisé pour la taille de l'orifice 16 et la résistance souhaitée.

Comme on peut le voir plus en détails à la figure 4, chaque languette 34 comporte une découpe 36 en forme de U qui délimite, dans la languette 34, une patte ou languette secondaire 38 qui s'étend depuis l'extrémité libre 34a de la languette 34 en direction du bord du cadre 32. L'extrémité libre 38a de la languette secondaire 38, située dans le fond de la découpe 36, comporte un orifice pour sa fixation avec le volet 20.

Selon l'invention, chaque languette 34 est réalisée d'une seule pièce avec le cadre 32, notamment par découpe laser d'une tôle. A l'état initial, de repos, le cadre 32 et les languettes 34, 38 sont donc coplanaires, couplés en face interne à la paroi 14 de l'enveloppe 10 et au volet 20, pour le maintenir en position fermée de l'orifice 16.

Lorsque la pression augmente dans l'enveloppe 10, elle exerce une contrainte sur la face interne de la paroi 14, ainsi que sur la face inférieure du volet 20 : il en résulte un effort normal, orienté vers le haut, qui est transmis par le volet 20 aux moyens de liaison 30 et notamment aux languettes 34 qui sont les points faibles en ce qui concerne la résistance mécanique au vu de leur conception.

De fait, selon l'invention, chaque languette 34 est déformable de manière permanente lorsqu'elle est soumise à une certaine contrainte orthogonale, correspondant à une pression interne à l'enveloppe 10 supérieure à un seuil, et/ou à une augmentation brutale et rapide de la pression ; inversement, la résistance mécanique des languettes 34 est telle que le maintien en position fermée est assuré tant que les conditions prévues ne sont pas remplies pour la déformation plastique.

Lorsque la contrainte devient supérieure au seuil de déformation, chacune des languettes 34 et des languettes secondaires 38, identiques entre elles, se déforme au niveau de son extrémité 34b, 38b opposée à son extrémité libre 34a, 38a. En se déformant, l'extrémité 34b, 38b de chaque languette 34 ou patte 38 forme une articulation, autour de laquelle la languette correspondante 34, 38 bascule normalement à la paroi de fixation 14, c'est-à-dire ici vers le haut. Comme les pattes 38 sont formées de découpes de la languette 34, les déformations sont sensiblement simultanées : par conséquent, l'extrémité libre 38a de chaque languette secondaire 38, et donc l'orifice de fixation au volet 20, se déplace selon une trajectoire sensiblement rectiligne, vers le haut. De fait, tel qu'illustré en figure 5, lorsque le volet 20 est dans sa position d'ouverture, la course verticale c du volet 20 correspond à la somme des courses de chacune des parties de l'élément déformable 34.

Par ailleurs, les moyens de liaison 30 du volet 20 comprennent également des moyens pour limiter la course verticale du volet 20 par rapport à la paroi 14, qui permettent de ne pas solliciter inutilement les éléments déformables 34 et leurs moyens de fixation. Cette limitation de la course verticale du volet 20 permet en outre de former entre la paroi supérieure 14, l'orifice 16 et le volet 20 un conduit annulaire d'évacuation des gaz dont la section de passage est prédéfinie : le débit des gaz s'échappant hors de l'enveloppe 10 peut être contrôlé, et la sortie des gaz n'est pas directe mais dirigée grâce à un effet de chicane. Outre la régulation du débit, le volet 20 selon l'invention permet ainsi de ralentir les gaz pour la sécurité environnementale.

Conformément à cet autre aspect de l'invention, les moyens pour limiter la course du volet 20 comprennent des moyens de guidage en translation 40 portés par le volet 20 et aptes à venir en butée sur la paroi 14 contre un élément fixe, tel que le cadre 32, lorsque le volet 20 arrive dans sa position d'ouverture ; l'organe de guidage 40 permet aussi de limiter la déformation de la languette 34, pour éviter également une éventuelle rupture.

Tel qu'illustré en figures 2 et 3, l'organe de guidage 40 comporte des ergots 42 qui font saillie latéralement par rapport aux bords du volet 20, formant une surface parallèle audit volet 20 mais décalée vers l'intérieur de l'enveloppe 10 d'une distance c correspondant à la course du volet 20. Les ergots 42 sont unitaires avec un élément de fixation 44 au volet 20, notamment une tôle plane verticale qui s'étend vers le bas depuis la face inférieure du volet 20 : lorsque le volet 20 se déplace, les ergots 42 viennent en butée contre le cadre 32, empêchant ainsi tout déplacement supplémentaire.

De préférence, les organes de guidage 40 sont sous forme de U, avec deux éléments de fixation 44 formant les branches et une portion de liaison 46 sensiblement orthogonale entre eux, solidarisée au volet 20, de préférence par l'intermédiaire de rivets. Cette configuration permet une réalisation en tôle pliée tout en étant suffisamment résistante pour les contraintes mécaniques exercées par le gaz sous pression qui s'échappe de l'orifice 16 et « bute » contre le volet 20. Alternativement, l'organe de guidage 40 pourrait par exemple présenter une section en forme de L ou de T.

La portion de liaison 46 comprend des moyens de solidarisation au volet 20, et également des moyens permettant la solidarisation des éléments déformables 34, qui peuvent être différents afin d'optimiser les critères de résistance mécanique et de montage/démontage. Avantageusement, les organes de guidage 40 s'étendent en travers du volet 20, pour s'appuyer *in fine* par quatre ergots 42 contre la paroi 14, et ils sont couplés à deux éléments déformables 34 symétriques du cadre 32, par l'intermédiaire de deux vis. Pour permettre la fixation directe des organes de guidage 40 sur le volet 20, les languettes 34 peuvent comprendre des passages adaptés : un orifice peut être percé dans la partie 34b de la languette 34, en regard de l'extrémité libre 38a de la patte 38 découpée ; alternativement, tel qu'illustré, la découpe 36 de la languette 34 forme elle-même un évidement 36a en prolongement de la patte 38. Toute autre alternative est possible dans la réalisation des éléments déformables 34.

En cas de surpression, les contraintes mécaniques entraînent donc la déformation des languettes 34 et le volet 20 se déplace orthogonalement à la paroi 14 ; à l'issue d'une course c prédéfinie, le volet 20 reste bloqué face à l'orifice 16 et les gaz peuvent continuer à s'échapper par la couronne ainsi formée. Pour accélérer l'ouverture du volet 20, il est avantageux que les éléments de fixation 44 comprennent des évidements 48 allégeant la structure sans en altérer la résistance mécanique ; accessoirement, les évidements 48 permettent aussi le passage du gaz et augmentent la surface d'évacuation.

Le passage ainsi créé en position d'ouverture permet d'éviter une augmentation trop importante de la surpression dans l'enveloppe 10 et l'éjection de parties de la cellule par explosion. Les languettes 34 se sont déformées de manière permanente, le volet 20 est donc maintenu dans sa position d'ouverture ; à noter que si la surpression interne à l'enveloppe 10 est due à un défaut autre que l'arc interne, la position ouverte du volet 20, facilement visible à proximité de l'enveloppe 10, peut permettre d'informer d'une surpression pour que l'opérateur puisse éventuellement mettre en oeuvre des opérations de vérification de l'installation et de remplacement des moyens de liaison 30, notamment de la pièce constituée du cadre 32 et des languettes 34.

Le remplacement des moyens de liaison 30 est facilité par leur mode de fixation démontable, avec par exemple un boulonnage des organes de guidage 40 sur le volet 20, du cadre 32 sur la paroi 14 de l'enveloppe 10 et des languettes 34 sur le volet 20 - les différents montages au sein d'un même dispositif d'obturation 20, 32, 40 pouvant être réalisés de la même façon ou en mélangeant plusieurs types de fixation. Plus souvent, il peut être requis de vérifier des éléments à l'intérieur de l'enveloppe 10 et/ou de retirer le volet 20. Le dispositif selon l'invention peut être dimensionné pour permettre un retrait temporaire du volet 20 : la longueur des ergots 42 et la largeur de l'élément de liaison 44 sont par exemple adaptées pour autoriser une translation latérale (dans le plan du volet 20) afin de libérer un ergot 42 pour un passage pivotant autour de l'autre ergot 42 par l'orifice 16. Pour retirer le volet 20, il suffit donc de déboulonner les deux fixations sur les éléments élastiques 34 : le volet 20 et les organes de butée 42 restent solidaires et peuvent être extraits par translation / pivotement au niveau d'un côté portant deux ergots 42.

En particulier, pour une ouverture 16 de dimensions 318 x 140 mm, un volet 20 se déplaçant d'une course c = 20 mm permet un échappement contrôlé et rapide des gaz d'arc en cas de besoin. Le volet 20, en tôle munie de deux pliages latéraux, est associé à deux organes de guidage 40 fixés en trois points et quatre languettes 34 solidaires d'un cadre 32 venant entourer l'orifice 16.

Les languettes 34 font au moins 50 mm de long par rapport au cadre 32, par exemple L = 53 mm, pour permettre la flexion et la course, avec formation d'une patte 38 de 1= 28 mm de long, et 16 mm de large pour permettre l'implantation d'un écrou sur l'organe de butée 40 et le volet 20 ; pour assurer la flexion sans bris de la languette 34, la zone de pliage de la languette 42 fait 2p = 14 mm, répartis en deux branches encadrant un évidement 36a de passage de la fixation organe de butée 42 / volet 20. Cette conception permet d'avoir la course de 20 mm au moins sans cassure, tout en restant compacte, ce qui permet de placer deux languettes 34 en regard sur le cadre 32 d'une largeur compatible avec la largeur de 200 mm d'une cheminée 18.

Pour que le flux d'échappement reste contrôlé à des valeurs prédéterminées, et pour assurer une solidité mécanique maintenant le volet 20 et les moyens de fixation 30 en place, les organes de guidage 40 sont quant à eux réalisés en tôle pliée, avec des branches 44 du U d'une longueur de 45 mm ; au niveau des ergots 42 (c = 20 mm sous la portion de liaison 46), la largeur de la poutre formée dans la partie de liaison 44 est de 2b = 15 mm supérieure à la dimension de l'orifice 16 pour permettre une répartition des efforts de butée contre la paroi 14 et le cadre 32 ; entre les ergots 42 et la portion de liaison 46, un retrait r est prévu, notamment de 14 à 15 mm de chaque côté, afin de donner le jeu permettant de faire coulisser latéralement le volet 20 dans l'ouverture 16 et permettre son démontage. Pour alléger la structure sans renoncer à sa solidité afin de permettre une ouverture rapide, chaque élément de fixation 44 est muni de six évidements 48, et la portion de liaison 46 elle-même est munie de quatre évidements entre chacun de ses moyens de fixation. L'invention permet donc d'obtenir un dispositif d'évacuation des gaz intégrant des formes dimensionnées pour maîtriser les conséquences du phénomène d'arc interne par déformation mécanique contrôlée de certaines pièces, ceci avec une fiabilité accrue grâce à l'utilisation d'une ouverture coulissante et non battante. Ceci est obtenu par :
- l'intégration des parties déformables sur une pièce, dont la rigidité est suffisamment élevée pour assurer l'IP de l'enveloppe 10 et sa robustesse avant essai, et suffisamment faible pour permettre une déformation sous l'effet de la pression générée par l'arc interne ;
- l'utilisation d'une pièce différente dont la position est maîtrisée à tout moment et indépendante de la variation possible de pression du phénomène d'arc interne pour assurer la fonction de régulation du débit d'échappement.

Plus largement, le dispositif selon le mode de réalisation préféré de l'invention assure :
- un volet 20 d'ouverture à coulissement, rapide à ouvrir en cas de défaut ;
- un échappement des gaz contrôlé ;
- l'absence de pièces « volantes », tel que requis par la norme ;
- un coût bas au vu de la réalisation en tôlerie, y compris pour l'attache 34 ;
- un ensemble 20, 32, 34, 40 robuste mécaniquement, bien qu'en tôle simple pliée ;
- des opérations de mise en place simples et peu susceptibles d'erreur, à savoir du pliage, de l'estampage et/ou de la découpe laser, et du rivetage/boulonnage ;
- un maintien de l'IP3x ou IP4x de la cellule 10 en utilisation normale par le volet 20 ;
- une fermeture IP assurée en permanence sans ajout de clip externe, contrairement aux systèmes à battants qui sont maintenus fermés usuellement par des clips en plastique ;
- la possibilité d'ouverture du système et d'accès à l'intérieur du poste 10 grâce au dimensionnement des éléments, en faisant coulisser le volet 20 latéralement, puis de le refermer par exemple pour maintenance, ce qui n'est pas possible avec les systèmes à clip de maintien en fermeture.

Il est entendu que certaines des fonctions sont accessoires et que les dimensions sont indicatives : l'invention peut être utilisée pour d'autres enveloppes que les cellules MT de coupure. En particulier, les différents éléments sont conçus et dimensionnés pour des fonctions qui ne sont pas nécessairement remplies de la même façon, voire pas du tout, dans l'art antérieur, et qui peuvent être appliqués ailleurs lorsque le découplage d'une pièce en deux éléments antagonistes (rigidité / déformation) est préféré.

## Revendications

1. Enveloppe (10) de protection d'un appareillage électrique, notamment moyenne tension, comprenant : une paroi (14) munie d'un orifice (16), un volet (20) apte à être déplacé sous l'action d'une surpression à l'intérieur de l'enveloppe (10) entre une première position d'obturation de l'orifice (16) vers une deuxième position d'ouverture dans laquelle un passage de gaz est permis entre le volet (20) et l'orifice (16), des moyens de liaison (30) du volet (20) à la paroi (14) de l'enveloppe (10), dans laquelle l'orifice (16) est réalisé, localisés en. périphérie de l'orifice (16), et maintenant le volet (20) en première position de fermeture lorsque la pression à l'intérieur de l'enveloppe (10) est inférieure à une valeur prédéfinie, **caractérisée en ce que** les moyens de liaison (30) comportent des premiers moyens (40) rigides solidaires du volet (20) et mobiles en translation de la première à la deuxième position par rapport à l'enveloppe (10) et des deuxièmes moyens (32, 34) fixés à l'enveloppe (10) et comprenant au moins un élément (34) déformable, apte à se déformer lorsque la pression à l'intérieur de l'enveloppe (10) est supérieure à ladite valeur prédéfinie.

2. Enveloppe de protection selon la revendication 1, dans laquelle les deuxièmes moyens comportent une pluralité d'éléments déformables (34) similaires qui sont répartis de manière symétrique par rapport à au moins un plan médian de l'orifice (16).

3. Enveloppe de protection selon l'une des revendications 1 ou 2, dans laquelle les deuxièmes moyens comprennent un cadre (32) de support qui est fixé à la paroi (14) de l'enveloppe (10) de façon rigide.

4. Enveloppe de protection selon la revendication 3 dans laquelle chaque élément déformable (34) comprend une languette (34) plane, fixée au volet (20) et reliée au cadre (32) de support.

5. Enveloppe de protection selon la revendication 4, dans laquelle chaque languette (34) comporte une découpe (36) en forme de U délimitant une patte (38) dont l'extrémité libre (38a) est fixée au volet (20).

6. Enveloppe de protection selon l'une quelconque des revendications 1 à 5 dans laquelle les deuxièmes moyens (32, 34) sont réalisés en une seule pièce par découpe d'une plaque métallique.

7. Enveloppe de protection selon l'une quelconque des revendications précédentes, dans laquelle les premiers moyens (40) comprennent des moyens (42) pour limiter la course du volet (20) vers sa deuxième position.

8. Enveloppe de protection selon la revendication 7, dans laquelle les premiers moyens (40) comprennent deux parties de fixation (44) reliées à une extrémité par une portion de liaison (46) pour former un U, ladite portion de liaison (46) étant fixée au volet (20), et les deux parties de fixation (44) portant des ergots (42) aptes à venir en butée contre un élément (32) fixé à la paroi (14) de l'enveloppe (10) lorsque le volet (20) est en deuxième position d'ouverture.

9. Enveloppe de protection selon la revendication 8 dans laquelle les moyens de liaison (30) comprennent deux premiers moyens (40) reliés au volet (20) et quatre éléments déformables (34).

10. Enveloppe de protection selon l'une des revendications 1 à 9 dans laquelle les premiers moyens (40) sont formés par découpe et pliage d'une plaque métallique.

11. Enveloppe de protection selon l'une quelconque des revendications précédentes, dans laquelle les moyens de liaison (30) sont fixés au volet (20) et/ou à la paroi (14) de l'enveloppe (10) par des moyens démontables.

12. Cellule de coupure comprenant une enveloppe selon l'une des revendications 1 à 11 logeant un appareil de coupure moyenne tension.

## Patentansprüche

1. Hülle (10) zum Schutz einer elektrischen Schaltanlage, insbesondere einer Mittelspannungsschaltanlage, umfassend: eine Wand (14), die mit einer Öffnung (16) ausgestattet ist, eine Klappe (20), die geeignet ist, unter der Wirkung eines Überdruckes im Inneren der Hülle (10) von einer ersten Position des Verschließens der Öffnung (16) zu einer zweiten Position des Öffnens, in welcher ein Hindurchströmen von Gas zwischen der Klappe (20) und der Öffnung (16) ermöglicht wird, verlagert zu werden, Mittel zur Verbindung (30) der Klappe (20) mit der Wand (14) der Hülle (10), in welcher die Öffnung (16) ausgebildet ist, die am Umfang der Öffnung (16) angeordnet sind und die Klappe (20) in der ersten Position des Schließens halten, wenn der Druck im Inneren der Hülle (10) niedriger als ein vordefinierter Wert ist, **dadurch gekennzeichnet, dass** die Verbindungsmittel (30) starre erste Mittel (40), die mit der Klappe (20) fest verbunden und bezüglich der Hülle (10) von der ersten zur zweiten Position translatorisch beweglich sind, und zweite Mittel (32, 34), die an der Hülle (10) befestigt sind und wenigstens ein verformbares Element (34) umfassen, das geeignet ist, sich zu verformen, wenn der Druck im Inneren der Hülle (10) höher als der vordefinierte Wert ist, umfassen.

2. Schutzhülle nach Anspruch 1, wobei die zweiten Mittel mehrere ähnliche verformbare Elemente (34) umfassen, die symmetrisch bezüglich wenigstens einer Mittelebene der Öffnung (16) verteilt sind.

3. Schutzhülle nach einem der Ansprüche 1 oder 2, wobei die zweiten Mittel einen Stützrahmen (32) umfassen, der starr an der Wand (14) der Hülle (10) befestigt ist.

4. Schutzhülle nach Anspruch 3, wobei jedes verformbare Element (34) eine ebene Zunge (34) umfasst, die an der Klappe (20) befestigt und mit dem Stützrahmen (32) verbunden ist.

5. Schutzhülle nach Anspruch 4, wobei jede Zunge (34) einen U-förmigen Ausschnitt (36) umfasst, der eine Lasche (38) begrenzt, deren freies Ende (38a) an der Klappe (20) befestigt ist.

6. Schutzhülle nach einem der Ansprüche 1 bis 5, wobei die zweiten Mittel (32, 34) durch Zuschneiden einer Metallplatte einstückig ausgebildet sind.

7. Schutzhülle nach einem der vorhergehenden Ansprüche, wobei die ersten Mittel (40) Mittel (42) zum Begrenzen des Hubes der Klappe (20) in Richtung ihrer zweiten Position umfassen.

8. Schutzhülle nach Anspruch 7, wobei die ersten Mittel (40) zwei Befestigungsteile (44) umfassen, die an einem Ende durch einen Verbindungsabschnitt (46) verbunden sind, um ein "U" zu bilden, wobei der Verbindungsabschnitt (46) an der Klappe (20) befestigt ist und die zwei Befestigungsteile (44) Nasen (42) tragen, die geeignet sind, an einem an der Wand (14) der Hülle (10) befestigten Element (32) zur Anlage zu kommen, wenn sich die Klappe (20) in der zweiten Position des Öffnens befindet.

9. Schutzhülle nach Anspruch 8, wobei die Verbindungsmittel (30) erste Mittel (40), die mit der Klappe (20) verbunden sind, und vier verformbare Elemente (34) umfassen.

10. Schutzhülle nach einem der Ansprüche 1 bis 9, wobei die ersten Mittel (40) durch Zuschneiden und Biegen einer Metallplatte ausgebildet sind.

11. Schutzhülle nach einem der vorhergehenden Ansprüche, wobei die Verbindungsmittel (30) durch demontierbare Mittel an der Klappe (20) und/oder an der Wand (14) der Hülle (10) befestigt sind.

12. Schaltzelle, die eine Hülle nach einem der Ansprüche 1 bis 11 umfasst, die ein Mittelspannungsschaltgerät aufnimmt.

## Claims

1. Protection enclosure (10) for an electrical apparatus, notably medium voltage, comprising: a wall (14) provided with an orifice (16), a flap (20) that can be displaced under the action of an overpressure inside the enclosure (10) between a first position of blocking of the orifice (16) to a second position of opening in which a passage of gas is permitted between the flap (20) and the orifice (16), link means (30) linking the flap (20) to the wall (14) of the enclosure (10), in which the orifice (16) is produced, located at the periphery of the orifice (16), and keeping the flap (20) in the first position of closure when the pressure inside the enclosure (10) is below a predefined value, **characterized in that** the link means (30) comprise rigid first means (40) secured to the flap (20) and translationally mobile from the first position to the second position relative to the enclosure (10) and second means (32, 34) fixed to the enclosure (10) and comprising at least one deformable element (34), that can be deformed when the pressure inside the enclosure (10) is above said predefined value.

2. Protection enclosure according to Claim 1, in which the second means comprise a plurality of similar deformable elements (34) which are distributed symmetrically relative to at least one medium plane of the orifice (16).

3. Protection enclosure according to one of Claims 1 or 2, in which the second means comprise a support frame (32) which is rigidly fixed to the wall (14) of the enclosure (10).

4. Protection enclosure according to Claim 3, in which each deformable element (34) comprises a planar tongue (34), fixed to the flap (20) and linked to the support frame (32).

5. Protection enclosure according to Claim 4, in which each tongue (34) comprises a U-shaped cutout (36) delimiting a tab (38), the free end (38a) of which is fixed to the flap (20).

6. Protection enclosure according to any one of Claims 1 to 5 in which the second means (32, 34) are produced in a single piece by cutting from a metal plate.

7. Protection enclosure according to any one of the preceding claims, in which the first means (40) comprise means (42) for limiting the travel of the flap (20) to its second position.

8. Protection enclosure according to Claim 7, in which the first means (40) comprise two fixing parts (44) linked at one end by a link portion (46) to form a U, said link portion (46) being fixed to the flap (20), and the two fixing parts (44) bearing snugs (42) that can come into abutment against an element (32) fixed to the wall (14) of the enclosure (10) when the flap (20) is in the second position of opening.

9. Protection enclosure according to Claim 8, in which the link means (30) comprise two first means (40) linked to the flap (20) and four deformable elements (34).

10. Protection enclosure according to one of Claims 1 to 9, in which the first means (40) are formed by cutting and folding a metal plate.

11. Protection enclosure according to any one of the preceding claims, in which the link means (30) are fixed to the flap (20) and/or to the wall (14) of the enclosure (10) by dismantleable means.

12. Switching cell comprising an enclosure according to one of Claims 1 to 11 housing a medium voltage switching apparatus.
